# FASCICULE DE BREVET EUROPEEN

(11) **EP 0 485 292 B1**
(45) Date de publication et mention de la délivrance du brevet: **08.06.1994**
(21) Numéro de dépôt: 91402994.7
(22) Date de dépôt: 07.11.1991
(51) Int. Cl.: G01D 5/34, F41G 7/26

(54) **Dispositif optique de mesure de l'angle de roulis d'un projectile**
Optische Vorrichtung zum Messen des Rollwinkels eines Projektils
Optical device to measure the roll-angle of a projectile

(30) Priorité: 09.11.1990 FR 9013939
(43) Date de publication de la demande: 13.05.1992
(73) Titulaire: THOMSON-CSF, 75008 Paris (FR)
(72) Inventeur: Jano, Patrice, F-92045 Paris la Défense (FR); de Saxce, Thibaut, F-92045 Paris la Défense (FR)
(74) Mandataire: Beylot, Jacques

(56) Documents cités:
- EP-A- 0 345 093
- GB-A- 2 236 925
- US-A- 3 757 632
- US-A- 4 072 281

## Description

La présente invention concerne la mesure de l'angle de roulis d'un projectile.

L'évolution générale de la menace et des systèmes d'armes fait apparaître un besoin d'améliorer les performances des munitions grâce à un guidage tout en recherchant un coût minimum.

Il est alors particulièrement intéressant de réduire le plus possible la part de matériel sophistiqué embarquée à bord d'un projectile guidé consommable (calculateur, autodirecteur, centrale inertielle, fusée de proximité,..) en reportant le maximum de fonctions sur le seul poste de tir.

Le pilotage d'une munition guidée lancée par un canon classique ou électromagnétique et animée d'un mouvement de rotation autour de son axe, peut se faire à l'aide d'impulseurs latéraux à générateur de gaz, dont on commande le fonctionnement lorsqu'ils sont orientés dans la direction voulue. Cela nécessite de connaître à chaque instant l'angle de roulis du projectile.

Cette fonction de mesure angulaire du roulis est généralement assurée par une centrale inertielle (gyromètre) embarquée à bord du projectile, qui est coûteuse et consommable. En outre, cette centrale inertielle devient difficile à imaginer et à réaliser dans le cas d'un projectile lancé par un canon électromagnétique où l'accélération au départ peut atteindre 200.000g.

Il est connu de mesurer l'angle de roulis d'un projectile à l'aide d'un catadioptre équipé d'un polariseur disposé sur l'arrière du projectile, d'une source lumineuse éclairant l'arrière du projectile et d'un analyseur lumineux déduisant l'angle de roulis du projectile de la direction de polarisation du flux lumineux réfléchi par l'arrière de ce dernier. Cette mesure a cependant pour inconvénient de présenter une ambiguïté de π. Le document US-A-4 072 281 divulgue un tel dispositif, avec des moyens pour lever cette ambiguïté de π.

La présente invention a pour but de permettre la levée d'ambiguïté d'une mesure optique de l'angle de roulis d'un projectile, à l'aide de composants embarqués à bord du projectile qui soient robustes, fiables et à faible coût.

Elle a pour objet un dispositif optique de mesure de l'angle de roulis d'un projectile lancé par des moyens de lancement situés dans un poste de tir. Ce dispositif comporte, sur l'arrière du projectile, un catadioptre équipé d'un polariseur et, au poste de tir, une source lumineuse qui est décalée latéralement par rapport à l'axe de tir du projectile et dont le faisceau illumine l'arrière du projectile, et un analyseur de flux lumineux déduisant, de la direction de polarisation du flux lumineux réfléchi par l'arrière du projectile, l'angle de roulis de ce dernier. Il est remarquable en ce qu'il comporte en outre, un dièdre réflecteur qui est placé le long du flanc du projectile et tourné vers l'arrière de ce dernier, avec son arête normale à l'axe de rotation de roulis du projectile et qui renvoie le faisceau lumineux de la source à l'analyseur de flux lumineux une fois par tour de roulis du projectile lorsque la source lumineuse ne lui est pas occultée par le corps du projectile.

Le catadioptre peut être un trièdre réflecteur.

De préférence, l'analyseur de flux lumineux comporte un premier récepteur optique qui est sensible à l'intensité de flux lumineux et qui reçoit le flux lumineux réfléchi par le projectile par l'intermédiaire d'un polariseur constituant un analyseur de polarisation, un deuxième récepteur optique qui est également sensible à l'intensité de flux lumineux et qui est exposé directement au flux lumineux réfléchi par le projectile, un circuit de compensation des turbulences assurant la division du signal délivré par le premier récepteur optique par le signal délivré par le deuxième récepteur optique et un circuit d'évaluation de l'angle de roulis du projectile opérant à partir du signal délivré par le circuit de compensation des turbulences.

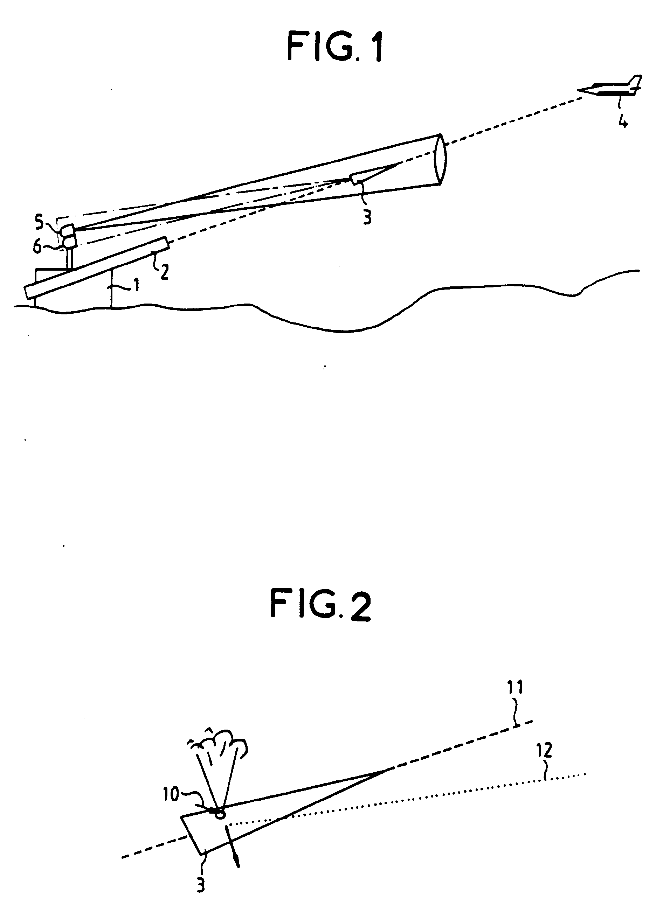

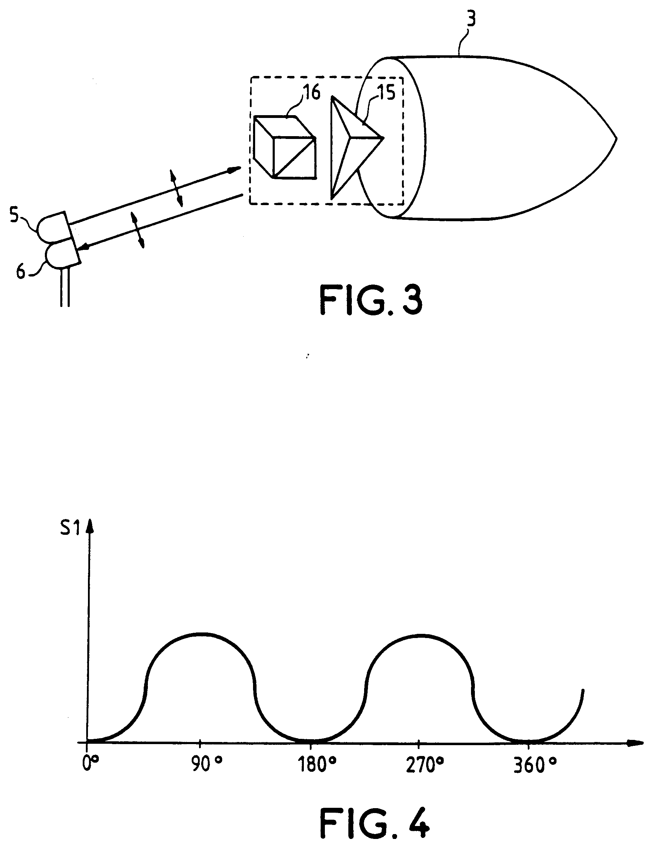

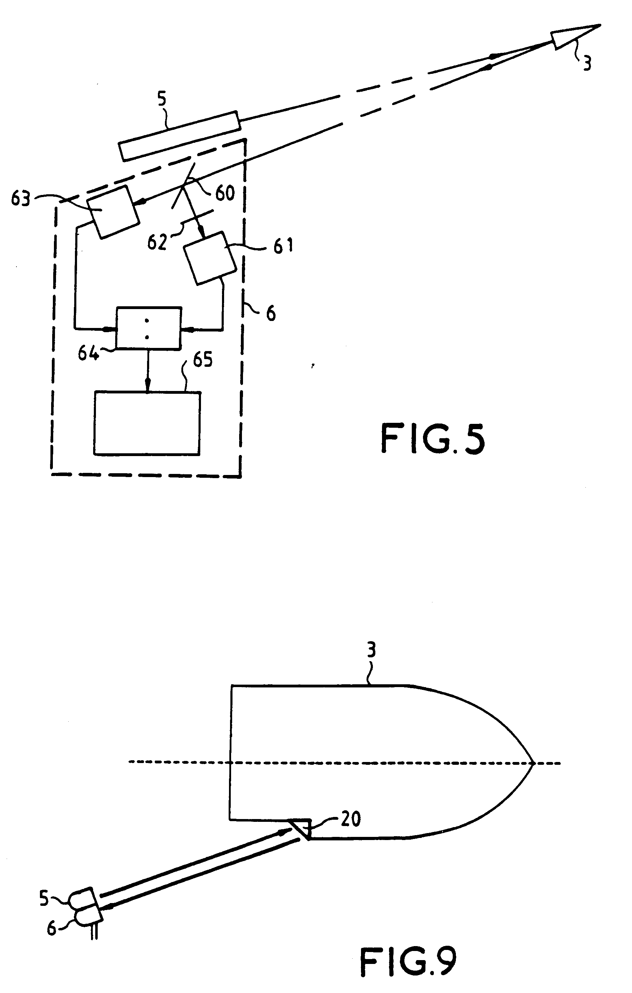

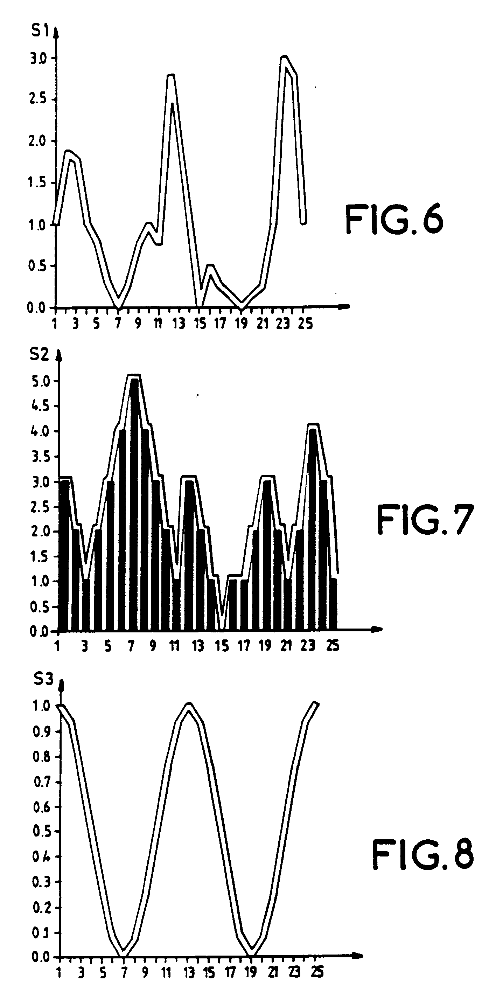

D'autres caractéristiques et avantages de l'invention ressortiront de la description de modes de réalisation donnés à titre d'exemple. Cette description sera faite ci-après, en regard du dessin dans lequel :
- une figure 1, montre un schéma d'ensemble d'un poste de tir de projectiles guidés, équipé d'un dispositif optique selon l'invention ;
- une figure 2, représente de manière schématique, un projectile guidé avec son moyen de changement de trajectoire ;
- une figure 3, représente de manière schématique, les principaux éléments du dispositif optique selon l'invention ;
- une figure 4, est un diagramme de courbe illustrant les variations d'intensité de flux lumineux qui sont détectées dans le dispositif optique selon l'invention en fonction de l'angle de roulis du projectile ;
- une figure 5, représente, de manière schématique, les principaux éléments d'un dispositif optique selon l'invention pourvu de moyens de compensation des turbulences ;
- des figures 6, 7, 8 sont des diagrammes de courbes illustrant le fonctionnement du dispositif optique représenté à la figure 5 et
- une figure 9, représente de manière schématique, un dispositif optique complémentaire permettant de lever une ambiguïté de π dans la mesure de l'angle de roulis du projectile.

Dans le dessin, les éléments identiques d'une figure à l'autre sont indexés par les mêmes références.

On distingue sur la figure 1, un poste de tir 1 équipé d'un canon 2 venant de lancer un projectile guidé 3 en direction d'une cible 4. Le dispositif optique de mesure d'angle de roulis du projectile guidé 3 comporte, au poste de tir 1, une source lumineuse 5 constituée d'un laser pointé sur le projectile guidé 3 et un analyseur de flux lumineux 6 qui est couplé mécaniquement à la source lumineuse 5 et qui analyse la direction de polarisation du flux lumineux réfléchi par le projectile guidé 3 pour en déduire à tout instant son angle de roulis.

Le laser constituant la source lumineuse 5 est pointé sur le projectile guidé 3 par un système de trajectographie classique. Par ailleurs, il fonctionne en impulsions pour transmettre des ordres de pilotage au projectile guidé 3.

Le projectile guidé 3 est éjecté du canon 2 avec un mouvement de rotation de roulis. Il comporte, comme représenté sur la figure 2, au moins un impulseur latéral constitué d'un orifice latéral d'éjection de gaz 10 qui peut être placé au centre de gravité et qui est couplé à un générateur de gaz embarqué à bord du projectile par l'intermédiaire d'une vanne ouverte par impulsions sous le contrôle d'un dispositif de pilotage répondant aux ordres transmis par les impulsions du laser. Sur commande, la vanne laisse échapper, pendant un temps très bref, une bouffée de gaz de propulsion par l'orifice latéral d'éjection. Cela déplace latéralement le projectile 3 qui est dévié dans la direction où a eu lieu la poussée de la bouffée de gaz et quitte son ancienne trajectoire 11 pour en adopter une nouvelle 12. Bien évidemment, pour pouvoir utiliser le ou les impulseurs latéraux à bon escient, il est nécessaire de connaître à tout instant l'angle de roulis du projectile 3.

Pour ce faire, le projectile guidé 3 comporte, sur sa face arrière, comme représenté sur la figure 3, un catadioptre 15 équipé d'un polariseur 16.

Ce catadioptre 15 peut être, comme représenté, un trièdre réflecteur réalisé à l'aide d'un coin de cube. C'est un invariant optique qui renvoie les faisceaux lumineux reçus dans leurs directions d'incidence. Le polariseur 16 ne laisse passer d'un faisceau lumineux que la composante à polarisation rectiligne parallèle à sa propre direction de polarisation qui est liée à l'attitude du projectile.

Avec une source lumineuse 5 engendrant un faisceau incident à polarisation rectiligne verticale, le polariseur 16 ne laisse passer complètement le faisceau que lorsque sa direction de polarisation est verticale ce qui se produit deux fois par tour de roulis du projectile 3. A ce moment, le catadioptre 15 reçoit le faisceau de la source lumineuse 5 sans qu'il soit atténué par le polariseur 16 et le renvoie dans sa direction d'incidence vers l'analyseur de flux lumineux 6 indépendamment de l'attitude du projectile selon les autres angles de tangage et de lacet. Comme le projectile tourne sur lui-même, le polariseur 16 fait varier l'intensité du flux de la source lumineuse 5 retourné à l'analyseur de flux lumineux 6, comme représenté à la figure 4, selon une loi en sinusoïde au carré, de fréquence double de la fréquence de rotation du projectile selon l'axe de roulis. Cette sinusoïde au carré est calée en phase à π près avec des maxima correspondant au passage de la direction de polarisation du polariseur 16 par la verticale. On peut donc, en graduant de 0 à 2π la courbe de variation d'intensité du flux lumineux réfléchi par le projectile 3, comme cela a été fait sur la figure 4, connaître à tout instant l'angle de roulis du projectile 3. C'est ce qui est effectué par l'analyseur de flux lumineux 6 au moyen des techniques classiques de filtrage. L'incertitude de π sur le calage en phase peut être levée par un essai d'un impulseur et par détection, par trajectographie, du sens de la déviation provoquée sur la trajectoire du projectile.

La source lumineuse 5 peut également engendrer un faisceau à polarisation circulaire. L'analyseur de faisceau lumineux 6 comporte alors un polariseur disposé en analyseur de polarisation devant un récepteur optique sensible à l'intensité du flux lumineux reçu. Comme dans le cas précédent, l'intensité du flux lumineux détectée par le récepteur optique varie selon une sinuoïde au carré, de fréquence double de la fréquence de rotation du projectile selon l'axe de roulis.

La mesure de l'angle de roulis du projectile peut être perturbée par des variations intempestives de l'intensité du flux lumineux réfléchi par le projectile en raison de la présence de turbulences naturelles ou provoquées par le sillage du projectile. Il est cependant possible de les compenser comme le montre le dispositif optique de mesure d'angle de roulis de la figure 5.

On distingue sur cette figure 5 une source lumineuse 5 qui illumine un projectile guidé 3 et qui est située à un poste de tir, à proximité d'un analyseur de flux lumineux 6 analysant le flux de la source lumineuse 5 réfléchi par le projectile 3 pour en déduire à tout instant l'angle de roulis du projectile 3.

La source lumineuse 5 est un laser qui engendre un faisceau lumineux à polarisation circulaire.

Le projectile 3 porte sur sa face arrière un catadioptre équipé d'un polariseur non visibles sur la figure 5 de sorte qu'il renvoie à l'analyseur de flux lumineux 6, un flux lumineux à polarisation rectiligne dont la direction de polarisation est fonction de son angle de roulis.

L'analyseur de flux lumineux 6 comporte : un séparateur tel qu'un miroir semi-transparent 60 qui divise le flux lumineux retourné par le projectile 3 en deux parties égales, un premier récepteur optique 61 précédé d'un polariseur 62 qui intercepte l'une des parties du flux lumineux délivrée par le miroir semi transparent 60, un deuxième récepteur optique 63 qui intercepte directement l'autre partie du flux lumineux délivrée par le miroir semi transparent 60, un circuit de compensation des turbulences 64 assurant la division du signal délivré par le premier récepteur optique 61 par le signal délivré par le deuxième récepteur optique 63 et un circuit d'évaluation d'angle de roulis 65 opérant à partir du signal délivré par le circuit de compensation des turbulences 64.

Les deux récepteurs optiques 61, 63 peuvent également être juxtaposés ce qui évite l'emploi du séparateur.

Eventuellement, le séparateur 60 et le polariseur 62 peuvent être un seul et même dispositif.

Le polariseur 62 fonctionne en analyseur de polarisation. Il laisse passer la partie du flux lumineux qui l'atteint en provenance du projectile 3 si la polarisation rectiligne de cette dernière est parallèle à sa direction de polarisation, la bloque si la polarisation rectiligne de cette dernière est perpendiculaire à sa direction de polarisation et n'en laisse passer qu'une proportion plus ou moins grande dans les autres cas intermédiaires en fonction de l'angle entre les directions de polarisation selon une loi déjà évoquée en sinusoïde au carré.

Le premier récepteur optique 61 qui est sensible à l'intensité du flux lumineux reçu par l'intermédiaire du polariseur 62 délivre un signal de sortie S1 dont l'amplitude représentée à la figure 6 varie selon une sinusoïde au carré, de fréquence double de la fréquence de rotation du projectile selon l'axe de roulis, affectée d'une modulation parasite importante due à des fluctuations de l'intensité lumineuse du faisceau réfléchi par le projectile en raison des turbulences naturelles et de celles provoquées par le sillage du projectile.

Le deuxième récepteur optique 63 qui est directement sensible à l'intensité du faisceau lumineux réfléchi par le projectile délivre un signal de sortie S2 dont l'amplitude représentée à la figure 7 est insensible aux changement de la direction de polarisation du faisceau et dépend uniquement des fluctuations d'intensité du faisceau dues aux turbulences.

Le circuit de compensation des turbulences 64 en divisant le signal S1 modulé en amplitude par la rotation suivant l'axe de roulis du projectile et par les turbulences, par le signal S2 modulé par les seules turbulences permet d'obtenir un signal S3 dont l'amplitude représentée à la figure 8 ne varie plus qu'en fonction de l'angle de roulis du projectile, selon une sinusoïde au carré, de fréquence double de la fréquence de rotation du projectile.

Le circuit d'évaluation d'angle de roulis 65 est un circuit de filtrage classique qui opère par exemple un filtrage prédictif centré sur le double de la fréquence de rotation de roulis du projectile qui est connue au départ lorsque le projectile sort du canon.

La figure 9 illustre un dispositlf optique complémentaire qui permet, lorsque la source lumineuse 5 et l'analyseur de flux lumineux 6 sont décalés latéralement par rapport à l'axe de tir du projectile 3, de lever l'ambiguïté de π sur la mesure de l'angle de roulis du projectile 3 à partir du flux lumineux réfléchi par le catadioptre équipé du polariseur sans avoir à procéder à l'essai d'un impulseur.

Ce dispositif complémentaire consiste en un dièdre réflecteur 20, par exemple un prisme à 90°, placé sur le flanc du projectile 3 et tourné vers l'arrière de ce dernier, avec son arête normale à l'axe de rotation en roulis du projectile 3. Le dièdre réflecteur 20 ne renvoie selon l'axe d'incidence que les rayons lumineux arrivant perpendiculairement à son arête. Les rayons lumineux émis dans sa direction par la source lumineuse 5 décalée latéralement par rapport à l'axe de tir du projectile 3 ne sont perpendiculaires à son arête que deux fois au cours de chaque tour de roulis du projectile 3. Comme en l'une des ces occasions, il est caché de la source lumineuse 5 et de l'analyseur de flux lumineux 6 par le corps du projectile 3, il ne renvoie le faisceau de la source lumineuse 5 à l'analyseur de faisceau lumineux 6 qu'une fois par tour de roulis du projectile alors que celui-ci à un angle de roulis particulier. La précision est liée à la divergence de la source lumineuse 5 qui doit, de toute façon, être faible pour avoir une longue portée.

Grâce au dièdre réflecteur 20, l'analyseur de faisceau lumineux 6 reçoit en plus du flux lumineux réfléchi par le catadioptre équipé du polariseur, une impulsion lumineuse qui apparaît à chaque tour de roulis du projectile pour une valeur particulière de l'angle de roulis et qui permet de lever l'ambiguïté de π sur la mesure.

Dès son départ, le projectile est éclairé par le faisceau de la source lumineuse. L'analyseur de flux lumineux reçoit un flux lumineux renvoyé par le catadioptre équipé d'un polariseur et des impulsions lumineuses renvoyées par le dièdre réflecteur qui permettent de mesurer l'angle de roulis sans ambiguïté. Lorsque le projectile s'éloigne, les impulsions lumineuses diminuent en intensité et l'on garde la phase par filtrage prédictif centré sur le double de la fréquence de rotation.

Le dispositif optique de mesure d'angle de roulis qui vient d'être décrit a l'avantage de reporter toute la complexité c'est-à-dire les circuits de traitement, au poste de tir et non sur le projectile consommable. Les composants sur le projectile sont simples et robustes et résistent aux fortes accélérations.

## Revendications

1. Dispositif optique de mesure de l'angle de roulis d'un projectile (3) lancé par des moyens de lancement (2) situés dans un poste de tir (1) comportant, sur l'arrière du projectile (3), un catadioptre (15) équipé d'un polariseur (16) et, au poste de tir, une source lumineuse (5) qui est décalée latéralement par rapport à l'axe de tir du projectile (3) et dont le faisceau illumine l'arrière du projectile (3), et un analyseur de flux lumineux (6) déduisant, de la direction de polarisation du flux lumineux réfléchi par l'arrière du projectile (3), l'angle de roulis de ce dernier avec une ambiguïté de π, caractérisé en ce qu'il comporte en outre, pour lever l'ambiguïté de π sur la mesure de l'angle de roulis, un dièdre réflecteur (20) qui est placé le long du flanc du projectile (31) et tourné vers l'arrière de ce dernier, avec son arête normale à l'axe de rotation de roulis du projectile (3) et qui renvoie le faisceau lumineux de la source (5) à l'analyseur de flux lumineux (6) une fois par tour de roulis du projectile (3) lorsque la source lumineuse (5) ne lui est pas occultée par le corps du projectile (3).

2. Dispositif selon la revendication 1, caractérisé en ce que l'analyseur de flux lumineux (6) comporte :
- un premier récepteur optique (61) qui est sensible à l'intensité du flux lumineux et qui reçoit, par l'intermédiaire d'un polariseur (62), le flux lumineux réfléchi par l'arrière du projectile (3) ;
- un deuxième récepteur optique (63) qui est sensible à l'intensité du flux lumineux et qui reçoit directement le flux lumineux réfléchi par l'arrière du projectile (3) ;
- un circuit de compensation (64) des fluctuations d'intensité du flux lumineux dues aux turbulences, assurant la division du signal délivré par le premier récepteur optique (61) par le signal délivré par le deuxième récepteur optique (63) et ;
- un circuit (65) d'évaluation d'angle de roulis opérant à partir du signal délivré par le circuit de compensation (64).

## Patentansprüche

1. Optische Vorrichtung zur Messung des Rollwinkels eines Geschosses (3), das von in einer Abschußstation (1) liegenden Abschußmitteln (2) abgeschossen wird, wobei die Vorrichtung am hinteren Ende des Geschosses (3) einen mit einem Polarisator (16) ausgerüsteten Rückstrahler (15) sowie in der Abschußstation eine Lichtquelle (5), die seitlich bezüglich der Abschußachse des Geschosses (3) versetzt ist und deren Lichtstrahl die Rückseite des Geschosses (3) beleuchtet, und einen Lichtflußanalysator (6) aufweist, der aus der Polarisationsrichtung des von der Rückseite des Geschosses (3) reflektierten Lichtflusses den Rollwinkel des Geschosses mit einer Zweideutigkeit hinsichtlich π ableitet, dadurch gekennzeichnet, daß die Vorrichtung weiter zur Behebung dieser Zweideutigkeit hinsichtlich π bei der Messung des Rollwinkels einen reflektierenden Zweiflächler (20) aufweist, der an der Flanke des Geschosses (31) angebracht ist und nach hinten weist, wobei die Kante des Zweiflächlers zur Rolldrehachse des Geschosses (3) senkrecht verläuft und wobei der Zweiflächler das Licht der Quelle (5) zum Lichtflußanalysator (6) einmal je Umdrehung des Geschosses (3) reflektiert, wenn nämlich die Lichtquelle (5) durch den Körper des Geschosses (3) nicht verdeckt ist.

2. Vorrichtung nach Anspruch 1, dadurch gekennzeichnet, daß der Lichtflußanalysator (6) aufweist:
- einen ersten optischen Empfänger (61), der auf die Stärke des Lichtflusses anspricht und über einen Polarisator (62) den von der Rückseite des Geschosses (3) reflektierten Lichtfluß empfängt,
- eine zweiten optischen Empfänger (63), der auf die Stärke des Lichtflusses anspricht und unmittelbar den von der Rückseite des Geschosses (3) reflektierten Lichtfluß empfängt,
- eine Schaltung (64) zur Kompensation der Fluktuationen des Lichtflusses aufgrund der Turbulenzen, die das vom ersten optischen Empfänger gelieferte Signale (61) durch das vom zweiten optischen Empfänger (63) gelieferte Signal teilt,
- und eine Schaltung (65) zur Auswertung des Rollwinkels, die das von der Kompensationsschaltung (64) gelieferte Signal weiterverarbeitet.

## Claims

1. Optical device for measuring the roll angle of a projectile (3) launched by launching means (2) located in a firing station (1), comprising, at the rear of the projectile (3), a catadioptric system (15) equipped with a polariser (16) and, at the firing station, a light source (5) which is laterally offset in relation to the firing axis of the projectile (3) and whose beam illuminates the rear of the projectile (3), and a light-flux analyser (6) calculating, from the polarisation direction of the light flux reflected by the rear of the projectile (3), the roll angle of the latter with an ambiguity of π, characterised in that it furthermore comprises, in order to remove the ambiguity of π from the measurement of the roll angle, a reflector dihedron (20) which is positioned along the side of the projectile (31) and turned towards the rear of the latter, with its edge normal to the rotation axis of the roll of the projectile (3) and which reflects the light beam from the source (5) back to the light-flux analyser (6) once per turn of the roll of the projectile (3) when the light source (5) is not occulted from it by the body of the projectile (3).

2. Device according to Claim 1, characterised in that the light-flux analyser (6) comprises:
- a first optical receiver (61) which is sensitive to the intensity of the light flux and which receives, by the agency of a polariser (62), the light flux reflected by the rear of the projectile (3);
- a second optical receiver (63) which is sensitive to the intensity of the light flux and which receives directly the light flux reflected by the rear of the projectile (3);
- a circuit (64) compensating for the intensity fluctuations of the light flux due to turbulence, splitting the signal supplied by the first optical receiver (61) from the signal supplied by the second optical receiver (63) and;
- a circuit (65) for estimating the roll angle employing the signal supplied by the compensating circuit (64).
